# EUROPÄISCHE PATENTSCHRIFT

(11) **EP 2 885 778 B1**
(45) Veröffentlichungstag und Bekanntmachung des Hinweises auf die Patenterteilung: **28.06.2017**
(21) Anmeldenummer: 13750030.2
(22) Anmeldetag: 13.08.2013
(51) Int. Cl.: G08G 1/123, G08G 1/133, G08G 1/005

(54) **VERFAHREN ZUM AUFBEREITEN UND ANZEIGEN VON FAHRPLANINFORMATION**
METHOD FOR PREPARING AND DISPLAYING TIMETABLE INFORMATION
PROCÉDÉ D'ÉLABORATION ET D'AFFICHAGE D'INFORMATIONS D'HORAIRES DE TRANSPORT

(30) Priorität: 15.08.2012 DE 102012016119
(43) Veröffentlichungstag der Anmeldung: 24.06.2015
(73) Patentinhaber: LAWO Informationssyteme GmbH, 76437 Rastatt (DE)
(72) Erfinder: REICH, Hans-Joachim, 76228 Karlsruhe (DE)
(74) Vertreter: Witte, Weller & Partner Patentanwälte mbB
(86) Internationale Anmeldenummer: PCT/EP2013/066853
(87) Internationale Veröffentlichungsnummer: WO 2014/026956

(56) Entgegenhaltungen:
- EP-A1- 1 274 057
- WO-A1-96/00960
- DE-A1- 10 119 244
- US-A1- 2007 197 231
- US-B1- 8 169 342

## Beschreibung

Die vorliegende Erfindung betrifft ein Verfahren zum Aufbereiten und Anzeigen von Fahrplaninformation in einem Verkehrsnetz, das eine Mehrzahl von Haltestellen für Linien-Verkehrsmittel aufweist.

Derartige Verfahren basieren üblicherweise darauf, Fahrplaninformation an verschiedenen Orten entlang der Fahrrouten der öffentlichen Verkehrsmittel bereitzustellen. Dies kann beispielsweise über Bahnsteiganzeigen, Bushaltestellenanzeigen oder auch über Lautsprecherdurchsagen erfolgen.

So ist aus der DE 603 20 237 ein Verfahren zur Bestimmung einer Ankunftszeit eines Fahrzeugs an einem oder mehreren Positionen entlang der Fahrroute für das Fahrzeug bekannt, bei dem von dem Fahrzeug periodisch Signale übertragen werden, wenn das Fahrzeug eine bestimmte Position erreicht hat. Anschließend wird eine Ankunftszeit an einer oder mehreren der Positionen entlang der Fahrroute bestimmt. Diese Ankunftszeiten werden schließlich an Empfangseinheiten an verschiedenen Stellen entlang der Fahrzeugroute, wie z.B. in Geschäften, Haushalten oder Schulen übertragen. Damit soll eine genauere Vorhersage der Ankunftszeit des Fahrzeugs, z.B. eines Schulbusses, ermöglicht werden.

Hierbei wird die Fahrplaninformation jedoch nur an festen, vordefinierten Orten entlang der Fahrrouten der öffentlichen Verkehrsmittel ausgegeben. Insbesondere für Fahrgäste, die sich z.B. in einer fremden Stadt aufhalten und die mit öffentlichen Verkehrsmitteln an einen bestimmten Zielort gelangen wollen, ergibt sich das Problem, dass zunächst identifiziert werden muss, wo sich die nächste Haltestelle eines öffentlichen Verkehrsmittels befindet, das den gewünschten Zielort ansteuert. Möglicherweise stehen sogar mehrere alternative Haltestellen zur Ansteuerung des gewünschten Zielortes zur Verfügung. Dabei hängt die Wahl der entsprechenden Haltestelle z.B. von den zukünftigen Abfahrtszeiten der betreffenden öffentlichen Verkehrsmittel an diesen Haltestellen ab.

Damit wäre es wünschenswert, wenn die Fahrplaninformation direkt an den Standort des Fahrgasts übertragen werden könnte. Damit wäre es nicht notwendig, die verschiedenen Haltestellen aufzusuchen, um die beste Verbindung zu dem Zielort zu ermitteln. Ohnehin wäre dies für den Fahrgast auch nur in einem sehr engen Radius durchführbar.

Durch die starke Verbreitung von mobilen Datengeräten bzw. Mobiltelefonen kann die Fahrplaninformation z.B. über diese Geräte direkt an den Fahrgast übermittelt werden.

Bei bereits bekannten Verfahren zum Abruf von Fahrplaninformation auf derartigen mobilen Geräten werden spezielle Kenntnisse zum Bedienen der entsprechenden Softwareprogramme vorausgesetzt. So muss sich der Fahrgast oftmals in unübersichtlichen Menüs der verschiedenen Fahrplanauskünfte zurechtfinden. Die Navigation durch die komplizierten Menüstrukturen mit Hilfe von Scrollbalken und Dropdown-Listenfeldem gestaltet sich insbesondere auf den mobilen Geräten mit ihren kleinen Displays sehr mühsam. Darüber hinaus unterscheiden sich die Web-Seiten der Anbieter des öffentlichen Nahverkehrs von Stadt zu Stadt meist erheblich. Somit wird sehr viel Zeit in Anspruch genommen, bis die Abfahrtszeiten der öffentlichen Verkehrsmittel an geeigneten umliegenden Haltestellen ermittelt werden können.

Aus der DE 10 2008 017 392 ist ein Verfahren zur Abfrage von Fahrplaninformation bekannt, bei dem zunächst auf dem Mobiltelefon Zeichenketten eingegeben werden, die an eine zentrale Speichereinheit übermittelt werden. Die Zeichen- bzw. Ziffernfolgen werden über sogenannte Zeichenkettenfilter analysiert und aufbereitet. Mit Hilfe der Analyse werden aus den Zeichen- bzw. Ziffernfolgen spezifische Fahrplanabfragen abgeleitet. Beispielsweise führt die Ziffernfolge "030-040" zu einer Abfrage der Fahrplaninformation von Berlin nach Hamburg. Das aus der Anfrage resultierende Ergebnis wird anschließend auf das Mobiltelefon übermittelt.

Auch hier ist jedoch eine spezielle Kenntnis zur korrekten Generierung der entsprechenden Zeichenketten erforderlich, die wiederum die Abfrage der Fahrplaninformation erschwert. Darüber hinaus bietet auch dieses 'Verfahren keine Hilfestellung, um den Standort einer geeigneten, in der Nähe befindlichen Haltestelle zu identifizieren, die eine Verbindung zu dem gewünschten Zielort anbietet.

Aus der US 8,169,342 B2 ist ein Verfahren bekannt, bei dem Fahrgäste, die sich bereits in einem öffentlichen Verkehrsmittel befinden, auf eine bevorstehende Haltestelle aufmerksam gemacht werden. Dabei alarmiert das Verfahren den Fahrgast basierend auf einem Abstand zu einem Zielort.

Aus der WO 96/00960 ist ein Verfahren zum Anzeigen von FahrplanInformationen auf einem Handgerät bekannt, bei dem die Fahrplaninformationen von einer kontinuierlich sendenden Sendevorrichtung an einer Haltestelle für ein öffentliches Verkehrsmittel an das Handgerät gesendet werden. Dabei empfängt das Handgerät nur die Fahrplaninformationen, die von einer nahen Sendevorrichtung ausgesendet werden.

Aus der DE 101 19 244 A1 ist ein Verfahren zur Vermittlung und/oder Überwachung der Reise eines Reisewilligen in einem Fahrzeug eines Transportwilligen bekannt, wobei das Verfahren dazu verwendet wird, eine Mitfahrgelegenheit zu vermitteln und/oder durchzuführen. Dabei wird von einem Rechner die ermittelte Position sowie das Reiseziel des Reisewilligen mit der ermittelten Position und dem Reiseziel eines Transportwilligen abgeglichen.

Aus der EP 1 274 057 A1 ist ein System und ein Verfahren zur Bereitstellung von reiseleitenden Informationen auf einem mobilen Kommunikationsgerät bekannt, wobei bei dem vorgeschlagenen Verfahren zunächst ein Zielort in das Kommunikationsgerät eingegeben und an einen Leitrechner übermittelt wird. Der Leitrechner weist dem Kommunikationsgerät einen Aufenthaltsort zu und ermittelt in Abhängigkeit dieses Aufenthaltsort einen individuellen Fahrplan, der die zur Erreichung des Zielorts geeigneten öffentlichen Verkehrsmittel ausweist. Weiter wird dieser Fahrplan an das mobile Kommunikationsgerät übertragen und dort optisch und/oder akustisch wiedergegeben.

Vor diesem Hintergrund ist es die Aufgabe der vorliegenden Erfindung, ein in der Anwendung technisch einfaches und sogleich leicht verständliches Verfahren anzugeben, mit dem ein Nutzer öffentlicher Verkehrsmittel eine aktuelle Fahrplaninformation in seiner Umgebung abfragen kann.

Die obige Aufgabe wird erfindungsgemäß gelöst durch ein Verfahren der eingangs genannten Art, wobei zunächst die Annäherung eines portablen Gerätes an eine Haltestelle auf der Grundlage von positionsabhängigen Daten des portablen Gerätes erfasst wird, wobei wenigstens eine zukünftige Abfahrtszeit eines Linien-Verkehrsmittels an der Haltestelle ermittelt wird und wobei die Abfahrtszeit auf dem portablen Gerät ausgegeben wird.

Unter positionsabhängigen Daten sind im Sinne der vorliegenden Erfindung Daten zu verstehen, die der Standortbestimmung des portablen Gerätes dienen.

Als Beispiel für Linien-Verkehrsmittel seien Busse, Straßenbahnen, Untergrundbahnen und Züge genannt.

Das portable Gerät kann beispielsweise ein Mobiltelefon, ein mobiles Telefon mit zusätzlicher Computerfunktionalität und -konnektivität (sogenanntes Smartphone), ein PDA (Personal Digital Assistant), ein Tablet Computer oder ein Laptop sein.

Die Annäherung des portablen Gerätes an eine Haltestelle wird erfindungsgemäß in Abhängigkeit des Standorts des portablen Gerätes erfasst. Somit ist dieser Verfahrensschritt automatisiert. Eine manuelle Eingabe eines Haltestellennamens oder auch eine Auswahl einer Haltestelle in einer komplexen Menüstruktur ist nicht notwendig. Darüber hinaus fließt die aktuelle Standortinformation des portablen Gerätes automatisch in die Auswahl der zur Verfügung stehenden öffentlichen Verkehrsmittel ein. Daher ist es nicht erforderlich, dass sich der Nutzer des portablen Gerätes beispielsweise anhand von Straßennamen in der näheren Umgebung orientiert, um die eigene Position zu bestimmen. Damit wird eine sehr einfache und schnelle Abfrage der Fahrplaninformation ermöglicht.

Entsprechend dem erfindungsgemäßen Verfahren können auch die Abfahrtszeiten von mehreren Linien-Verkehrsmitteln an der betreffenden Haltestelle ermittelt und auf dem portablen Gerät ausgegeben werden. Zusätzlich können auch die Namen und/oder die Ankunftszeiten der Linien-Verkehrsmittel an der Haltestelle ermittelt und ausgegeben werden.

In einer weiteren Ausführungsform des Verfahrens können auch die Abfahrtszeiten von mehreren Linien-Verkehrsmitteln an mehreren Haltestellen ausgegeben werden, denen sich der Nutzer des portablen Gerätes nähert.

Sämtliche Informationen können dabei optisch und/oder akustisch auf dem portablen Gerät ausgegeben werden.

Besonders bevorzugt ist es, wenn die Mitführung des portablen Gerätes auf einem Linien-Verkehrsmittel auf der Grundlage der positionsabhängigen Daten des portablen Gerätes erfasst wird, wenigstens eine Umsteigemöglichkeit auf ein anderes Linien-Verkehrsmittel an der Haltestelle, der sich das portable Gerät nähert, ermittelt wird und die Umsteigemöglichkeit auf dem portablen Gerät ausgegeben wird.

Dadurch ist keine Eingabe einer Nummer oder eines Namens des Linien-Verkehrsmittels erforderlich. Mit Hilfe einer Nachverfolgung der positionsabhängigen Daten des portablen Gerätes kann automatisch bestimmt werden, ob das portable Gerät auf einem Linien-Verkehrsmittel mitgeführt wird. Die positionsabhängigen Umsteigemöglichkeiten können somit im Wesentlichen ohne Zeitaufwand für den Nutzer auf dem portablen Gerät optisch und/oder akustisch ausgegeben werden. Damit wird die Handhabung von Fahrplaninformationen wesentlich vereinfacht.

Ferner erfolgt das Ermitteln der wenigstens einen zukünftigen Abfahrtszeit und das Ausgeben der Abfahrtszeit auf dem portablen Gerät automatisch, sobald die Annäherung des portablen Gerätes an die Haltestelle erfasst wird.

Durch diese Maßnahme wird automatisch eine Abfahrtszeit ermittelt und auf dem portablen Gerät ausgegeben, sobald sich das portable Gerät einer Haltestelle nähert. Zeitaufwendige Interaktionen des Nutzers mit dem portablen Gerät sind damit nicht mehr erforderlich. Die Fahrplaninformation kann daher auch von technisch nicht versierten Nutzern problemlos abgerufen werden.

Erfindungsgemäß erfolgt das Ermitteln der wenigstens einen Umsteigemöglichkeit und das Ausgeben der Umsteigemöglichkeit auf dem portablen Gerät automatisch, sobald die Mitführung des portablen Gerätes auf dem Linien-Verkehrsmittel erfasst wird.

Die Umsteigemöglichkeit umfasst dabei Daten wie z.B. den Namen bzw. die Nummer des Linien-Verkehrsmittels, die Abfahrtzeit und/oder den Ort der Haltestelle, an dem das anschließende Linien-Verkehrsmittel genutzt werden kann. Durch das automatisierte Aufzeigen von Umsteigemöglichkeiten ist keine weitere Eingabe durch den Nutzer notwendig, um die Fahrplaninformationen abzurufen.

Das Erfassen der Annäherung des portablen Gerätes an die Haltestelle, und/oder vorzugsweise das Erfassen der Mitführung des portablen Gerätes auf dem Linien-Verkehrsmittel, erfolgt auf der Seite des portablen Gerätes.

Beispielsweise kann auf einem Smartphone eine Softwareapplikation (sogenannte App) gestartet werden. Diese überwacht mit Hilfe der positionsbezogenen Daten, ob sich das Smartphone einer Haltestelle annähert und/oder ob das Smartphone auf einem Linien-Verkehrsmittel mitgeführt wird. Dabei kann die reine Positionsberechnung des Smartphones mit Hilfe von endgeräte-basierenden oder netzbasierten Ortungsverfahren durchgeführt werden. Allerdings findet in dieser Ausführungsform auf dem Smartphone/portablen Gerät die Auswertung statt, ob sich das Smartphone beispielsweise einer Haltestelle annähert.

In einer weiteren Ausführungsform wird das Ermitteln der wenigstens einen zukünftigen Abfahrtzeit und/oder das Ermitteln der wenigstens einen Umsteigemöglichkeit mittels des portablen Gerätes gestartet.

Sobald beispielsweise mit Hilfe einer App eine Annäherung des Smartphones an eine Haltestelle erkannt wird, wird die Fahrplaninformation abgerufen und auf dem Smartphone ausgegeben. Dies entspricht dem sogenannten "Pull-Prinzip". Der Abruf der Fahrplaninformation kann automatisch oder auch erst nach Bestätigung durch den Nutzer des Smartphones erfolgen.

Gemäß einer nicht erfindungsgemäßen Ausführungsform erfolgt das Erfassen der Annäherung des portablen Gerätes an die Haltestelle und/oder das Erfassen der Mitführung des portablen Gerätes auf dem Linien-Verkehrsmittel auf der Seite einer Datenverarbeitungseinheit, für die Positionsdaten von zumindest einem Teil des Verkehrsnetzes zugreifbar sind.

Bei der Datenverarbeitungseinheit kann es sich beispielsweise um einen Zentralrechner einer Leitstelle handeln, der aufgrund der positionsbezogenen Daten des portablen Gerätes auswertet, ob sich das portable Gerät beispielsweise einer oder mehreren Haltestellen nähert. Die reine Ermittlung der Gerätepositionen kann dabei wiederum mit Hilfe einer endgeräte-basierten oder einer netzbasierten Ortung durchgeführt werden.

In einer nicht erfindungsgemäßen Ausführungsform wird das Ermitteln der wenigstens einen zukünftigen Abfahrtszeit und/oder das Ermitteln der wenigstens einen Umsteigemöglichkeit durch die Datenverarbeitungseinheit gestartet.

Sobald durch die Datenverarbeitungseinheit beispielsweise eine Annäherung des portablen Gerätes an eine Haltestelle festgestellt wird, startet die Datenverarbeitungseinheit das Ermitteln der entsprechenden Abfahrtszeiten/Umsteigemöglichkeiten. Die Ermittlung dieser Daten kann von der Datenverarbeitungseinheit selbst oder auch von einer beliebigen anderen Recheneinheit innerhalb des Betriebsleitsystems des Verkehrsnetzes ausgeführt werden. Die ermittelten Daten werden anschließend auf dem portablen Gerät ausgegeben (sogenanntes "Push-Prinzip").

Gemäß einer nicht erfindungsgemäßen Ausführungsform wird das portable Gerät an der Datenverarbeitungseinheit angemeldet.

Vorteilhafterweise wird das portable Gerät für den Fahrplaninformationsservice (Übermittlung von Abfahrtszeiten und/oder Umsteigemöglichkeiten an das portable Gerät) im Vorfeld bei der Datenverarbeitungseinheit angemeldet. Damit kann der Nutzer des portablen Geräts selektiv einstellen, wann und wo er eine Zustellung derartiger Informationen wünscht.

In einer weiteren Ausführungsform wird die Annäherung des portablen Gerätes an die Haltestelle erfasst, sobald ein definierter Maximalabstand zwischen dem portablen Gerät und der Haltestelle unterschritten wird.

Mit anderen Worten wird mit Hilfe dieser Maßnahme ein Fangradius um die Haltestelle definiert. Unterschreitet der Nutzer des portablen Gerätes den Fangradius bzw. den definierten Maximalabstand, so wird dies als Annäherung an die betreffende Haltestelle gewertet. Die Abfahrtszeiten/Umsteigemöglichkeiten werden ermittelt und auf dem portablen Gerät ausgegeben. Zur Personalisierung kann der Maximalabstand/Fangradius z.B. individuell festgelegt werden. Darüber hinaus kann der Fangradius auch in Abhängigkeit der Art der Haltestelle definiert werden. So kann beispielsweise für Bushaltestellen ein kleinerer Fangradius festgelegt werden als für Bahnhöfe.

Gemäß einer weiteren Ausführungsform wird zunächst ein Zielort in das portable Gerät eingegeben, anschließend werden Reiseverlaufsdaten ermittelt, die wenigstens einen Umsteigehinweis, einen Namen einer Zielhaltestelle und/oder eine geplante Ankunftszeit an der Zielhaltestelle aufweisen, und schließlich werden die Reiseverlaufsdaten auf dem portablen Gerät ausgegeben.

Damit kann sich der Nutzer des portablen Gerätes eine Reiseroute zu einem gewünschten Zielort anzeigen lassen. Dazu muss lediglich z.B. der Name des Zielortes in dem portablen Gerät eingegeben werden. Den Startpunkt der Reiseroute ermittelt das portable Gerät bzw. eine Recheneinheit innerhalb des zugeordneten Betriebsleitsystems selbsttätig aufgrund der positionsabhängigen Daten des portablen Gerätes. Optional können auch mehrere Alternativrouten ausgegeben werden. Alternativ kann auch in Abhängigkeit von voreingestellten Präferenzen des Nutzers (schnelle Route, kostengünstige Route, kurzer Fußweg etc.) nur die am besten geeignete Route ausgegeben werden.

In einer weiteren Ausführungsform greift das portable Gerät über ein drahtloses Netzwerk auf Fahrplaninformation zu, die zumindest teilweise in einer zentralen Speichereinheit und/oder zumindest teilweise in einer Mehrzahl von dezentralen Speichereinheiten abgespeichert ist.

Durch diese Maßnahme wird die Fahrplaninformation, die z.B. ständig aufgrund der momentanen Verkehrslage aktualisiert wird, beispielsweise auf einer zentralen Speichereinheit der Leitstelle und/oder auf dezentralen Speichereinheiten der Haltestellen abgespeichert. Alternativ kann die Fahrplaninformation auch von einer zentralen Speichereinheit eines entsprechenden Diensteanbieters bereitgestellt werden. Damit kann das portable Gerät immer auf die aktuellen Fahrplaninformationen zugreifen. Bei einer Verspätung eines Linien-Verkehrsmittels kann der Nutzer beispielsweise auf eine andere Haltestelle bzw. auf ein anderes Linien-Verkehrsmittel ausweichen. Wird die Fahrplaninformation auf der zentralen Speichereinheit der Leitstelle und dezentralen Speichereinheiten der verschiedenen Haltestellen abgespeichert, so kann hiermit eine Datenredundanz erzielt werden. Somit ist sichergestellt, dass das portable Gerät auch bei Ausfall bzw. Nichterreichbarkeit einer der Speichereinheiten auf die Fahrplaninformation zugreifen kann.

Gemäß einer weiteren Ausführungsform wird auf dem portablen Gerät Fahrplaninformation mit den Abfahrtszeiten wenigstens eines Linien-Verkehrsmittels an einer Mehrzahl von Haltestellen abgespeichert.

Wird die Fahrplaninformation auf einem lokalen Speicher des portablen Gerätes abgespeichert, so kann der Nutzer auch auf Fahrplandaten zugreifen, wenn z.B. in einem Untergrundbahnhof keine Verbindung zu den zentralen/dezentralen Speichereinheiten des Betriebsleitsystems oder des Diensteanbieters hergestellt werden kann. Damit wird ein sogenannter "Offline-Betrieb" des portablen Gerätes ermöglicht. Die Fahrplaninformation kann dabei zu einem von dem Nutzer ausgewählten Zeitpunkt oder auch in voreingestellten Intervallen von den zentralen/dezentralen Speichereinheiten auf das portable Gerät geladen werden.

In einer weiteren Ausführungsform werden die positionsabhängigen Daten des portablen Gerätes über ein verkehrsnetz-spezifisches Positionierungssystem, über ein globales Satellitennavigationssystem und/oder über ein Mobilfunknetzwerk ermittelt.

Zur Lokalisierung des portablen Gerätes können vielfältige Möglichkeiten genutzt werden. So kann die Standortbestimmung beispielsweise über das GPS (Global Positioning System) oder das GSM (Global System for Mobile Communications) Netzwerk durchgeführt werden. Ist eine entsprechende Funkverbindung zu diesen Systemen nicht möglich, so kann die Lokalisierung des portablen Gerätes auch über WLAN, Bluetooth oder RFID (Radio Frequency Identification) erfolgen. Darüber hinaus können auch weitere verkehrsnetz-spezifische Lösungen gewählt werden, die dazu geeignet sind, den Nutzer beispielsweise einem bestimmten Linien-Verkehrsmittel zuzuordnen (z.B. Lichtschranken an den Türen eines Busses mit zusätzlicher Identifikation). Außerdem können auch mehrere Lokalisierungstechnologien parallel genutzt werden, um die Positionierungsgenauigkeit zu erhöhen. Durch die Verwendung mehrerer Technologien kann zusätzlich die Berechnungszeit für die Lokalisierung des portablen Gerätes optimiert werden.

In einer weiteren Ausführungsform werden die positionsabhängigen Daten des portablen Gerätes über eine Nahfeldkommunikation ermittelt und/oder die Fahrplaninformation über die Nahfeldkommunikation an das portable Gerät übertragen.

Das NFC-Verfahren (Near Field Communication) stellt eine weitere Möglichkeit zur Standortbestimmung des portablen Gerätes dar. Insbesondere in Anwendungsbereichen, in denen der GPS-Empfang gestört oder nicht verfügbar ist (z.B. Untergrundbahnen) wird über NFC eine Positionsbestimmung ermöglicht. Gleichzeitig stellt NFC eine exakte Standortbestimmung des portablen Gerätes z.B. im Bereich von Bahnhöfen mit mehreren Haltestellen auf geringem Raum sicher. Darüber hinaus kann NFC genutzt werden, um die Fahrplaninformation auf das portable Gerät zu übertragen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der Erfindung zu verlassen.

Ausführungsbeispiele der Erfindung sind in der Zeichnung dargestellt und werden in der nachfolgenden Beschreibung näher erläutert. Es zeigen:
- Fig. 1: in schematischer Form ein Verkehrsnetz mit einer Mehrzahl von Haltestellen für Linien-Verkehrsmittel zur Erläuterung einer Ausführungsform eines erfindungsgemäßen Verfahrens;
- Fig. 2: das Verkehrsnetz zur Erläuterung einer weiteren Ausführungsform des erfindungsgemäßen Verfahrens;
- Fig. 3: das Verkehrsnetz zur Erläuterung einer weiteren Ausführungsform des erfindungsgemäßen Verfahrens; und
- Fig. 4: das Verkehrsnetz zur Erläuterung einer weiteren Ausführungsform des erfindungsgemäßen Verfahrens.

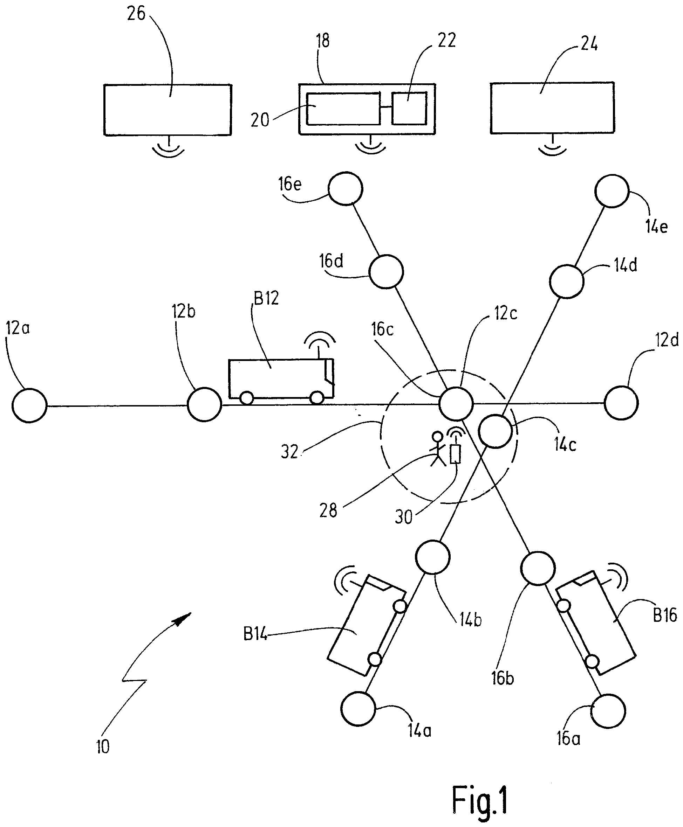

In der Fig. 1 ist ein Verkehrsnetz 10 mit einer Mehrzahl von Haltestellen 12, 14, 16 dargestellt. Dabei kennzeichnen die Haltestellen 12a bis 12d eine Buslinie des öffentlichen Nahverkehrs, die von einem Bus B12 befahren wird. Entsprechend markieren die Haltestellen 14a bis 14e die Route eines Busses B14 und die Haltestellen 16a bis 16e die Route eines Busses B16.

Zur Koordinierung und zur Leitung des Betriebs der Linien-Verkehrsmittel, im vorliegenden Fall der Busse B12, B14, B16, dient eine Leitstelle 18. Die Leitstelle 18 weist wenigstens eine Datenverarbeitungseinheit 20 und einen zentralen Speicher 22 auf. In dem zentralen Speicher 22 wird u.a. eine Fahrplaninformation für das Verkehrsnetz 10 abgelegt. Die Fahrplaninformation kann alternativ oder zusätzlich in dezentralen Speichereinheiten abgelegt werden, die beispielsweise den Haltestellen 12, 14 und 16 zugeordnet sind. Durch die zusätzliche Abspeicherung der Fahrplaninformation in dezentralen Speichereinheiten und der damit verbundenen Datenredundanz kann die Ausfallsicherheit des Betriebsleitsystems erhöht werden. In einer weiteren alternativen Ausführungsform kann die Fahrplaninformation auch auf einer zentralen Speichereinheit eines Diensteanbieters abgespeichert sein.

Die Leitstelle 18 steht in Funkkontakt mit den Bussen B12, B14 und B16. Für die Funkverbindung können analoge Betriebs- und Bündelfunksysteme oder auch digitale Funksysteme (z.B. Tetra oder Tetrapol) verwendet werden. Alternativ kann für die Kommunikation zwischen der Leitstelle 18 und den Bussen B12, B14, B16 auch ein öffentliches Mobilfunknetzwerk 24 (z.B. GSM, LTE) genutzt werden.

Besonders vorteilhaft wird die in dem zentralen Speicher 22 abgelegte Fahrplaninformation ständig an die aktuelle Verkehrslage angepasst. Gerät der Bus B12 beispielsweise in einen Stau, so kann die betreffende Fahrplaninformation direkt aktualisiert und anschließend an den folgenden Haltestellen 12c und 12d ausgegeben werden. Dazu bestimmen die Linien-Verkehrsmittel B12, B14, B16 ihren Standort beispielsweise anhand eines globalen Satellitennavigationssystems 26 (z.B. GPS). Alternativ kann der Standort der Busse B12, B14, B16 auch über das Mobilfunknetzwerk 24 bestimmt werden. Eine weitere Ortungsvariante der Linien-Verkehrsmittel B12, B14, B16 stellt die logische Ortung dar. Hierbei wird beispielsweise lediglich die zurückgelegte Strecke des Busses B12 (gemessen von der Starthaltestelle 12a) an die Leitstelle 18 übermittelt. Eventuell kann zusätzlich ein Abgleich mit den angefahrenen Haltestellen (Erkennen einer Türöffnung) erfolgen. Diese Variante ist unsicherer als die physikalische Ortung mittels des globalen Satellitennavigationssystems 26. Allerdings müssen weniger Daten als bei der physikalischen Ortung an die Leitstelle 18 übertragen werden. Anschließend wird von der Datenverarbeitungseinheit 20 ein Vergleich der übermittelten Standortdaten der Linien-Verkehrsmittel B12, B14, B16 mit sogenannten Plandaten (Standortdaten der Linien-Verkehrsmittel bei planmäßigem Fahrverlauf) durchgeführt, um die aktuelle Fahrplanabweichung der Linien-Verkehrsmittel B12, B14, B16 zu bestimmen. Daraus wird eine aktualisierte Fahrplaninformation abgeleitet und in dem zentralen Speicher 22 abgespeichert.

Es soll nun angenommen werden, dass sich ein Nutzer 28 in einem Bereich des Verkehrsnetzes 10 befindet, der eines der Linien-Verkehrsmittel B12, B14, B16 benutzen möchte. Darüber hinaus soll angenommen werden, dass der Nutzer 28 ein portables Gerät 30, im vorliegenden Fall ein Smartphone 30, mit sich führt. Da der Nutzer 28 z.B. ortsfremd ist, ist ihm die Lage der nächstliegenden Haltestellen 12, 14, 16 nicht bekannt. Aus diesem Grund verwendet der Nutzer 28 sein Smartphone 30 und startet auf diesem ein Softwareprogramm, eine sogenannte App. Die App baut über das Mobilfunknetzwerk 24 eine Datenverbindung zu der Leitstelle 18 auf, um die nächstliegenden Haltestellen 12, 14, 16 und die dazugehörige Fahrplaninformation abzurufen. Zur Identifizierung der nächstliegenden Haltestellen 12, 14, 16 muss zunächst der Standort des Smartphones 30 bestimmt werden. Dazu schickt die Leitstelle 18 beispielsweise eine Standortabfrage an das Mobilfunknetzwerk 24. Das Mobilfunknetzwerk 24 ortet das Smartphone 30 aufgrund der aktuellen verwendeten Mobilfunkzelle und eventuell zusätzlichen Signaldaten des Smartphones 30, die in dem Mobilfunknetzwerk 24 verfügbar sind. Die ermittelte Standortinformation des Smartphones 30 wird von dem Mobilfunknetzwerk 24 an die Leitstelle 18 zurückgesendet. Anschließend vergleicht die Leitstelle 18 die ermittelte Standortinformation des Smartphones 30 mit Koordinaten der Haltestellen 12, 14, 16. Zur Eingrenzung der Haltestellen 12, 14, 16 wird ein Maximalabstand 32 verwendet, der entweder über den Nutzer 28 definiert und auf dem Smartphone 30 abgespeichert wird oder der in der Leitstelle 18 hinterlegt ist. Mit anderen Worten definiert der Maximalabstand 32 einen Fangradius für Haltestellen 12, 14, 16 im Bereich des Smartphones 30. Im vorliegenden Beispiel wird somit die Annäherung des Smartphones 30 an die Haltestellen 12c/16c und 14c erfasst. Die Leitstelle 18 ermittelt daraufhin mit Hilfe der in dem zentralen Speicher 22 abgelegten aktualisierten Fahrplandaten die Fahrplaninformation der Haltestellen 12c/16c und 14c. Die Fahrplaninformation kann beispielsweise die Ankunftszeiten, die Abfahrtszeiten, die Zielhaltestellen und/oder die Namen bzw. Nummern der Linien-Verkehrsmittel B12, B14, B16 umfassen. Zusätzlich kann die Leitstelle 18 die Koordinaten der Haltestellen 12c/16c und 14c an das Smartphone 30 übermitteln. Damit wird es dem Nutzer 28 ermöglicht, eine der Haltestellen 12c/16c oder 14c unter Anwendung eines Navigationssystems zielgerichtet anzusteuern.

Bei dem soeben geschilderten Beispiel wird das sogenannte Pull-Prinzip verwendet, d.h. der Nutzer 28 fordert mit Starten der App auf dem Smartphone 30 explizit die Fahrplaninformation von der Leitstelle 18 an. Alternativ kann jedoch die Fahrplaninformation auch nach dem sogenannten Push-Prinzip an das Smartphone 30 übermittelt werden. In diesem alternativen Ausführungsbeispiel registriert sich der Nutzer 28 über sein Smartphone 30 an der Leitstelle 18 für einen Fahrplaninformationsservice, der Fahrplaninformation an das Smartphone 30 überträgt, sobald sich das Smartphone 30 einer Haltestelle 12, 14, 16 annähert. Die Annäherung des Smartphones 30 an eine Haltestelle 12, 14, 16 kann dabei äquivalent zu dem vorigen Beispiel definiert werden, bei dem eine Annäherung erkannt wird, sobald der Maximalabstand 32 zwischen dem Smartphone 30 und einer der Haltestellen 12, 14, 16 unterschritten wird. Zur Überprüfung dieses Maximalabstands 32 ist wiederum eine Lokalisierung des Smartphones 30 erforderlich. Beispielsweise kann das Smartphone 30 seinen aktuellen Standort über das globale Satellitennavigationssystem 26 (z.B. GPS) ermitteln. Diese Standortinformationen werden anschließend von dem Smartphone 30 mittels des Mobilfunknetzwerkes 24 an die Leitstelle 18 übertragen. Die Leitstelle 18 vergleicht nun die erhaltenen Standortinformationen mit den Koordinaten der Haltestellen 12, 14, 16. Sobald sich eine der Haltestellen 12, 14, 16 innerhalb des Fangradius des Smartphones 30 befindet, wird die zugehörige Fahrplaninformation (die evtl. auch die Fahrplaninformation von mehreren Linien-Verkehrsmitteln B12, B14, B16 umfassen kann) an das Smartphone 30 übermittelt. Somit muss sich der Nutzer 28 in diesem Ausführungsbeispiel nur einmal für den Fahrplaninformationsservice registrieren. Anschließend erhält er automatisch ohne weitere Interaktion die Fahrplaninformation der in der Nähe befindlichen Haltestellen 12, 14, 16. Dies ermöglicht eine sehr einfache Benutzung der öffentlichen Verkehrsmittel. Eine aufwendige zeitintensive Recherche der Fahrplaninformation ist nicht notwendig. Darüber hinaus erhält der Nutzer 28 eine ständig aktualisierte Fahrplaninformation, die an die momentane Verkehrslage in dem Verkehrsnetz 10 angepasst ist.

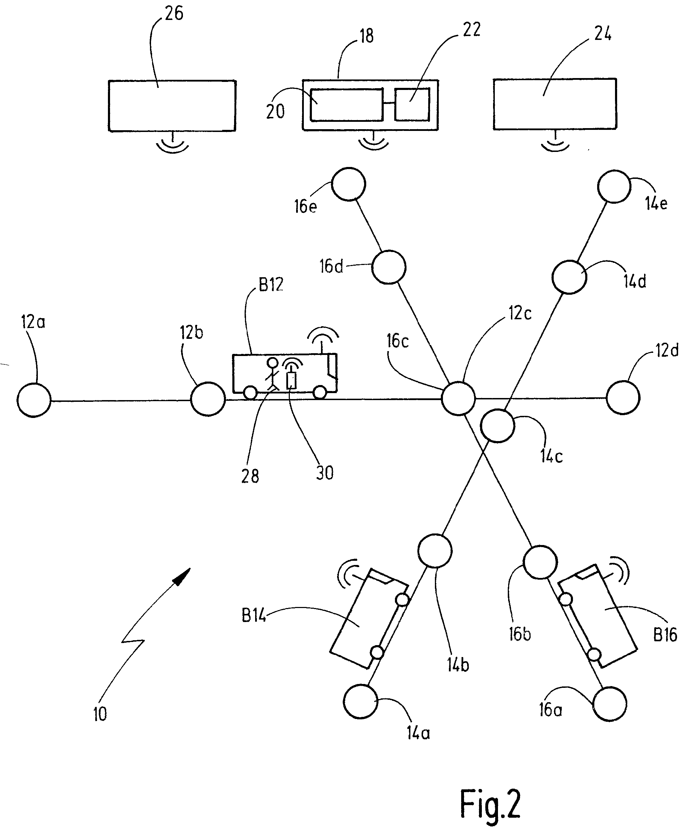

Zur Erläuterung einer weiteren Ausführungsform des Verfahrens ist in Fig. 2 wiederum das Verkehrsnetz 10 dargestellt. Die in Fig. 2 gezeigten Elemente entsprechen hinsichtlich ihres Aufbaus und ihrer Funktionsweise generell den in Fig. 1 dargestellten Elementen und sind daher durch gleiche Bezugszeichen gekennzeichnet. Im Folgenden werden im Wesentlichen die Unterschiede erläutert.

In diesem Ausführungsbeispiel soll angenommen werden, dass der Nutzer 28 Fahrgast des Busses B12 ist. Wie in dem vorigen Beispiel führt der Nutzer 28 das Smartphone 30 mit sich. Der Nutzer 28 ist möglicherweise an Umsteigemöglichkeiten interessiert, da er an ein Ziel gelangen möchte, das von dem Bus B12 nicht angefahren wird. Konsequenterweise startet der Nutzer 28 eine App auf dem Smartphone 30 zum Abruf von Fahrplaninformation. Automatisch oder auf Anforderung durch den Nutzer 28 baut die App über das Mobilfunknetzwerk 24 eine Datenverbindung zu der Leitstelle 18 auf. Über diese Datenverbindung wird von dem Smartphone 30 eine Anforderung für Fahrplaninformation an die Leitstelle 18 gesendet. Darüber hinaus stellt das Smartphone 30 nach Starten der App eine Funkverbindung zu dem globalen Satellitennavigationssystem 26 her. Mit Hilfe des globalen Satellitennavigationssystems 26 ermittelt das Smartphone 30 die aktuellen Standortinformationen und sendet diese ebenfalls über das Mobilfunknetzwerk 24 an die Leitstelle 18. Anschließend vergleicht die Datenverarbeitungseinheit 20 der Leitstelle 18 die Standortinformationen des Smartphones 30 mit den Koordinaten der Haltestellen 12, 14, 16 und den Koordinaten der Reiserouten der Linien-Verkehrsmittel B12, B14, B16. Durch diesen Vergleich wird von der Datenverarbeitungseinheit 20 eine Mitführung des Smartphones 30 auf dem Bus 12 erfasst. Infolgedessen ermittelt die Datenverarbeitungseinheit 20 die nächste Haltestelle, die der Bus B12 anfährt (im vorliegenden Beispiel die Haltestelle 12c/16c). Die Datenverarbeitungseinheit 20 prüft nun, ob Linien-Verkehrsmittel mit einem anderen Zielort diese Haltestelle 12c/16c anfahren. In dem vorliegenden Beispiel fährt auch der Bus B16 mit der Endhaltestelle 16e die Haltestelle 12c/16c an. Aufgrund dessen ermittelt die Datenverarbeitungseinheit 20 aus dem zentralen Speicher 22 die Fahrplaninformation des Busses B16 an der Haltestelle 12c/16c. Die Fahrplaninformation kann eine Ankunftszeit, eine Abfahrtszeit und/oder einen Namen bzw. eine Nummer inklusive der Endhaltestelle des Busses B16 umfassen. Diese Fahrplaninformation wird von der Datenverarbeitungseinheit 20 über das Mobilfunknetzwerk 24 an das Smartphone 30 gesendet und auf diesem ausgegeben.

Zusätzlich kann um die nächste angefahrene Haltestelle 12c/16c ein Radius definiert werden, in dem weitere Umsteigemöglichkeiten berücksichtigt werden. Befindet sich die Haltestelle 14c beispielsweise nur wenige Meter entfernt von der Haltestelle 12c/16c, so bietet auch der Bus B14 eine interessante Umsteigemöglichkeit für den Nutzer 28, wenn dieser den Zielort 14e anfahren möchte. Dazu kann die Datenverarbeitungseinheit 20 bei der Ermittlung von Umsteigemöglichkeiten auch die Fahrplaninformation jener Haltestellen ermitteln, die sich innerhalb des definierten Radius um die nächste angefahrene Haltestelle 12c/16c befinden. Damit wird auf dem Smartphone 30 in dem vorliegenden Beispiel auch die Fahrplaninformation des Busses B14 angezeigt.

Die oben geschilderte Anwendung des Smartphones 30 und die Abfrage der Fahrplaninformation orientiert sich an dem Pull-Prinzip. Analog zu Fig. 1 können auch die Umsteigemöglichkeiten gemäß dem Push-Prinzip an das Smartphone 30 übertragen werden. So kann sich der Nutzer 28 im Vorfeld über das Mobilfunknetzwerk 24 bei einem Fahrplaninformationsservice der Leitstelle 18 registrieren. Der Fahrplaninformationsservice der Leitstelle 18 verfolgt daraufhin ständig die Position des Smartphone 30. Die Positionsbestimmung des Smartphones 30 kann beispielsweise dadurch erfolgen, dass die Leitstelle 18 Positionsanfragen an das Mobilfunknetzwerk 24 sendet, das das Smartphone 30 über die aktuell verwendete Mobilfunkzelle lokalisiert. Die Datenverarbeitungseinheit 20 vergleicht anschließend die Positionsdaten des Smartphones 30 mit den Koordinaten der Haltestellen 12, 14, 16 und den Koordinaten der Reiserouten der Busse B12, B14, B16. Dadurch wird die Mitführung des Smartphones 30 auf dem Bus B12 erfasst. Anschließend werden die Umsteigemöglichkeiten an den Haltestellen 12c/16c und 14c, denen sich das Smartphone 30 annähert, ermittelt und über das Mobilfunknetzwerk 24 an das Smartphone 30 übertragen. Mit Hilfe des Smartphones 30 werden die Umsteigemöglichkeiten dem Nutzer 28 visuell oder auch akustisch präsentiert.

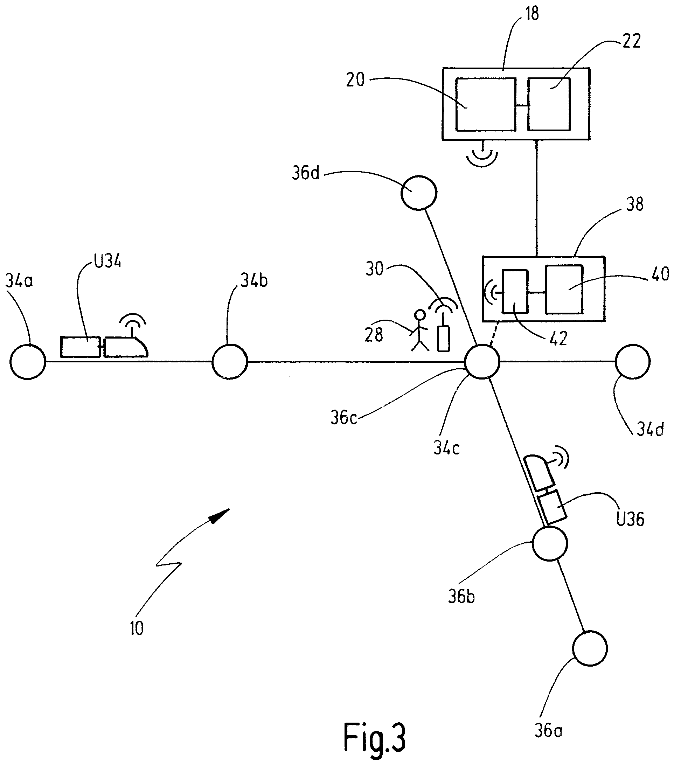

Fig. 3 zeigt das Verkehrsnetz 10 mit zwei Untergrundbahnlinien, die von Untergrundbahnen U34, U36 befahren werden. Dabei verkehrt die Untergrundbahn U34 an Haltestellen 34a bis 34d und die Untergrundbahn U36 an Haltestellen 36a bis 36d. Die Untergrundbahnen U34, U36 stehen analog zu den Bussen B12, B14, B16 in Funkkontakt mit der Leitstelle 18. Dazu kann beispielsweise ein verkehrsnetz-spezifisches Funksystem genutzt werden, das auch in den von den Untergrundbahnen U34, U36 befahrenen Tunneln verfügbar ist. Über diesen Funkkontakt können die Untergrundbahnen U34, U36 u.a. ihre Standortinformation an die Leitstelle 18 übertragen. Die Standortinformation kann beispielsweise über Ortsbaken (per Infrarot oder induktiv über Koppelspulen) ermittelt werden. Dadurch kann die in dem zentralen Speicher 22 abgelegte Fahrplaninformation ständig aktualisiert werden. Eventuelle Fahrplanverzögerungen, z.B. aufgrund eines sehr hohen Fahrgastaufkommens, können bei der Koordination des Untergrundbahnverkehrs durch die Leitstelle 18 berücksichtigt werden. In diesem Ausführungsbeispiel weist die Leitstelle 18 eine Kommunikationsverbindung zu einer Haltestelleninformationseinheit 38 auf, die der Haltestelle 34c/36c zugeordnet ist. Die Haltestelleninformationseinheit 38 weist eine dezentrale Speichereinheit 40 und eine Nahfeldkommunikationseinheit (NFC-Einheit) 42 auf. Die für die Haltestelle 34c/36c relevante Fahrplaninformation wird von der Datenverarbeitungseinheit 20 zusätzlich an die Haltestelleninformationseinheit 38 übertragen und dort in der dezentralen Speichereinheit 40 abgelegt. Durch diese Redundanz wird die Ausfallsicherheit des Gesamtsystems erhöht. Außerdem verbessert sich die Geschwindigkeit bei der Abfrage von Fahrplaninformation.

In dem vorliegenden Beispiel soll angenommen werden, dass sich der Nutzer 28 mit seinem Smartphone 30 im Bereich der Untergrundbahnhaltestelle 34c/36c aufhält. Aufgrund dieses Standortes ist die Verbindung des Smartphones 30 zu dem globalen Satellitennavigationssystem 26 und/oder dem Mobilfunknetzwerk 24 nicht verfügbar oder zumindest stark gestört. Startet der Nutzer 28 auf dem Smartphone 30 die App, um Fahrplaninformation abzurufen, so stellt das Smartphone 30 aufgrund der eingeschränkten Empfangsverhältnisse eine Nahfeldkommunikationsverbindung zu der NFC-Einheit 42 her. Aufgrund der Charakteristik der Nahfeldkommunikation (kurze Reichweite) ist damit gleichzeitig der Standort des Smartphones 30 bekannt. Die Haltestelleninformationseinheit 38 ermittelt aus der dezentralen Speichereinheit 40 die Fahrplaninformation der Untergrundbahnen U34, U36 und übermittelt diese mit Hilfe der Nahfeldkommunikationsverbindung an das Smartphone 30. Der Nutzer 28 erhält damit beispielsweise die Ankunftszeiten, Abfahrtszeiten, Endhaltestellen und/oder Linienbezeichnungen der Untergrundbahnen U34, U36.

Analog zu den Ausführungsbeispielen der Fig. 1 und 2 kann die Fahrplaninformation auch in dem vorliegenden Beispiel nach dem Push-Prinzip auf das Smartphone 30 übertragen werden. Dazu registriert sich der Nutzer 28 mit seinem Smartphone 30 an dem Fahrplaninformationsservice der Leitstelle 18. Sobald sich der Nutzer 28 mit dem Smartphone 30 einer NFC-Einheit 42 nähert, wird das Smartphone 30 lokalisiert und die entsprechende Fahrplaninformation wird an das Smartphone 30 automatisch übertragen und an diesem ausgegeben.

Darüber hinaus kann das Smartphone 30 in einem sogenannten Offline-Betrieb betrieben werden. Der Offline-Betrieb ermöglicht eine Abfrage von Fahrplaninformation für den Fall, dass keine oder nur ein Teil der Kommunikationsinfrastrukturkomponenten (globales Satellitennavigationssystem 26, Leitstelle 18, Mobilfunknetzwerk 24, Haltestelleninformationseinheit 38) verfügbar sind. Dazu wird die Fahrplaninformation, solange beispielsweise eine Verbindung von dem Mobilfunknetzwerk 24 zu dem Smartphone 30 besteht, auf das Smartphone 30 übertragen und in einem lokalen Speicher des Smartphones 30 abgespeichert. Befindet sich der Nutzer 28 mit seinem Smartphone 30 anschließend in einem Untergrundbahntunnel, so kann mittels einer Nahfeldkommunikation oder auch anderen Technologien wie z.B. WLAN oder Bluetooth lediglich der Standort des Smartphones 30 bestimmt werden. Die ermittelte Standortinformation wird anschließend mit der lokal abgespeicherten Fahrplaninformation verglichen. Schließlich werden die Abfahrtszeiten, Ankunftszeiten etc. der Untergrundbahnen U34, U36 an der nächstliegenden Haltestelle 34c/36c auf dem Smartphone 30 ausgegeben. In einer weiteren alternativen Ausführungsform kann die Standortbestimmung auch durch die Eingabe des Haltestellennamens in das Smartphone 30 erfolgen. Damit ist in dieser Ausführungsform keine Verbindung zu einer der Kommunikationsinfrastrukturkomponenten erforderlich.

Die Fahrplaninformation für den Offline-Betrieb kann dabei entweder auf Anfrage des Nutzers 28 oder auch in festen zeitlichen Intervallen auf das Smartphone 30 bzw. den lokalen Speicher des Smartphones 30 übertragen werden.

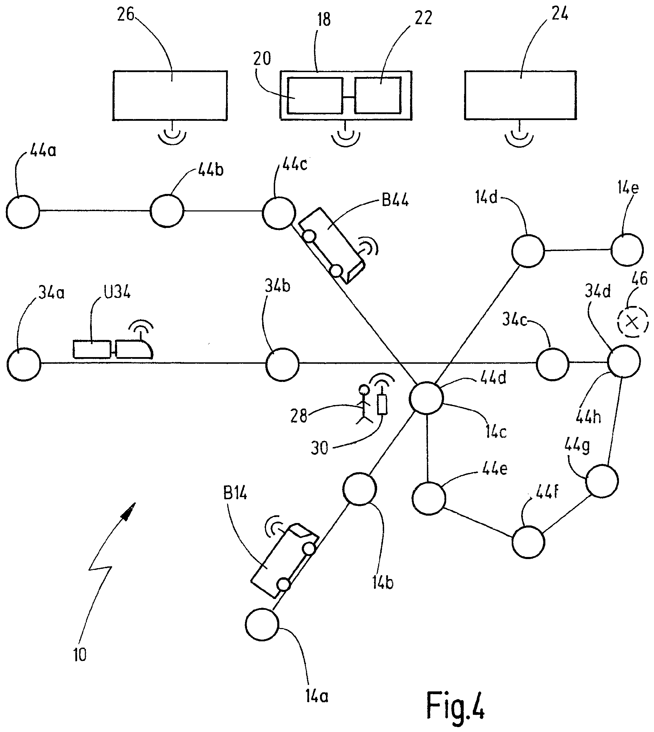

Die Fig. 4 zeigt das Verkehrsnetz 10 zur Erläuterung einer weiteren Ausführungsform des Verfahrens. Gleiche Elemente in Bezug auf die vorhergehenden Figuren sind durch gleiche Bezugszeichen gekennzeichnet. Im Folgenden werden im Wesentlichen die Unterschiede erläutert.

Das Verkehrsnetz 10 aus Fig. 4 weist zusätzlich eine Busroute entlang von Haltestellen 44a bis 44h auf, die von einem Bus B44 befahren wird. Die Kommunikation zwischen dem Bus B44 und der Leitstelle 18 erfolgt in gleicher Weise wie die Kommunikation der anderen Linien-Verkehrsmittel und soll daher nicht mehr näher erläutert werden.

In diesem Beispiel soll angenommen werden, dass sich der Nutzer 28 zusammen mit dem Smartphone 30 in einem Bereich des Verkehrsnetzes 10 bewegt und an einen Zielort 46 gelangen möchte. Dazu startet der Nutzer 28 die App auf dem Smartphone 30. Anschließend gibt der Nutzer 28 beispielsweise den Namen oder die Koordinaten des Zielortes 46 in das Smartphone 30 ein. Das Smartphone 30 ermittelt nun mit Hilfe des globalen Satellitennavigationssystems 26 den aktuellen Standort. Diese Standortinformation wird zusammen mit dem eingegebenen Zielort 46 über das Mobilfunknetzwerk 24 an die Leitstelle 18 übermittelt. Die Datenverarbeitungseinheit 20 berechnet auf der Grundlage der Standortinformation, des Zielortes 46 und der in dem zentralen Speicher 22 abgelegten Fahrplaninformation eine oder mehrere alternative Reiserouten zu dem Zielort 46. Außerdem kann von dem Smartphone 30 der von dem Nutzer 28 definierte Maximalabstand 32 (Fangradius) an die Leitstelle 18 übertragen werden, der die Auswahl der Reiserouten eingrenzt.

In dem vorliegenden Beispiel soll angenommen werden, dass die Haltestellen 14c/44d und 34b innerhalb des definierten Fangradius liegen. Somit bestehen für den Nutzer 28 im Wesentlichen drei Möglichkeiten, um zu dem Zielort 46 zu gelangen. Gemäß einer ersten Möglichkeit kann der Nutzer 28 zunächst einen längeren Fußweg zu der Untergrundbahnhaltestelle 34b zurücklegen, um dann mit Hilfe der schnellen Untergrundbahnverbindung U34 an die Haltestelle 34d zu fahren, die in unmittelbarer Umgebung des Zielortes 46 liegt. Gemäß einer zweiten Möglichkeit kann der Nutzer 28 einen kurzen Fußweg zu der Haltestelle 14c zurücklegen und dann mit dem Bus B14 zu der Haltestelle 14e fahren. Allerdings fährt der Bus B14 später von der Haltestelle 14c ab als die Untergrundbahn U14 von der Haltestelle 34b. Außerdem ist die Endhaltestelle 14e weiter von dem Zielort 46 entfernt, so dass dort ein längerer Fußweg erforderlich ist. Als dritte alternative Möglichkeit ergibt sich die Fahrt mit dem Bus B44, der die naheliegende Haltestelle 44d anfährt. Vorteilhaft ist, dass der Bus B44 bis zu der Haltestelle 44h fährt, die ebenfalls in unmittelbarer Nähe des Zielortes 46 liegt. Nachteilig sind jedoch die vielen Zwischenhaltestellen 44e, 44f, 44g, die bis zum Erreichen der Endhaltestelle 44h abgefahren werden müssen.

Diese von der Datenverarbeitungseinheit 20 errechneten alternativen Reiserouten werden über das Mobilfunknetzwerk 24 an das Smartphone 30 übertragen. Zusätzlich können auch evtl. erforderliche Umsteigehinweise für die errechneten Reiserouten an das Smartphone 30 übermittelt werden.

Die Reiserouten werden anschließend zusammen mit der geplanten Ankunftszeit an dem Zielort 46 auf dem Smartphone ausgegeben. Anhand dieser Information kann der Nutzer 28 die für ihn geeignete Reiseroute auswählen.

In einer alternativen Ausführungsform kann der Nutzer 28 bestimmte Präferenzen für den Reiseverlauf (schnelle Route, ausschließliche Benutzung von Untergrundbahnen, kurzer Fußweg, kostengünstige Reiseroute, etc.) in dem Smartphone 30 vorab einstellen. In Abhängigkeit dieser Präferenzen kann die App bereits eine optimale Reiseroute auswählen oder vorschlagen.

Obgleich somit bevorzugte Ausführungsformen des erfindungsgemäßen Verfahrens gezeigt worden sind, versteht sich, dass verschiedene Abwandlungen und Modifikationen vorgenommen werden können, ohne den Rahmen der Erfindung zu verlassen.

Beispielsweise kann das Verfahren für beliebige Linien-Verkehrsmittel (Busse, Untergrundbahnen, Straßenbahnen, Züge, etc.) verwendet werden.

Außerdem kann die endgeräte- oder netzwerkbasierte Lokalisierung des Smartphones 30 beliebig mit dem beschriebenen Pull-Prinzip oder Push-Prinzip kombiniert werden.

Statt dem Smartphone 30 können auch andere Arten von portablen Geräten wie z.B. Laptops, PDAs oder Tablet Computer eingesetzt werden.

Bei dem beschriebenen Mobilfunknetzwerk 24 kann es sich beispielsweise um ein GSM-Netzwerk, ein UMTS-Netzwerk oder ein LTE-Netzwerk handeln.

## Patentansprüche

1. Verfahren zum Aufbereiten und Anzeigen von Fahrplaninformation in einem Verkehrsnetz (10), das eine Mehrzahl von Haltestellen (12, 14, 16, 34, 36, 44) für Linien-Verkehrsmittel (B12, B14, B16, U34, U36, B44) aufweist, mit den Schritten:
- Erfassen der Annäherung eines portablen Gerätes (30) an eine Haltestelle (12, 14, 16, 34, 36, 44) auf der Grundlage von positionsabhängigen Daten des portablen Gerätes (30),
- Ermitteln wenigstens einer zukünftigen Abfahrtszeit eines Linien-Verkehrsmittels (B12, B14, B16, U34, U36, B44) an der Haltestelle (12, 14, 16, 34, 36, 44), und
- Ausgeben der Abfahrtszeit auf dem portablen Gerät (30),
wobei das Ermitteln der wenigstens einen zukünftigen Abfahrtszeit und das Ausgeben der Abfahrtszeit auf dem portablen Gerät (30) automatisch erfolgt, sobald die Annäherung des portablen Gerätes (30) an die Haltestelle (12, 14, 16, 34, 36, 44) erfasst wird, und wobei das Erfassen der Annäherung des portablen Gerätes (30) an die Haltestelle (12, 14, 16, 34, 36, 44) auf der Seite des portablen Gerätes (30) erfolgt.

2. Verfahren nach Anspruch 1, mit den Schritten:
- Erfassen der Mitführung des portablen Geräts (30) auf einem Linien-Verkehrsmittel (B12, B14, 816, U34, U36, B44) auf der Grundlage der positionsabhängigen Daten des portablen Gerätes (30),
- Ermitteln wenigstens einer Umsteigemöglichkeit auf ein anderes Linien-Verkehrsmittel (B12, B14, B16, U34, U36, B44) an der Haltestelle (12, 14, 16, 34, 36, 44), der sich das portable Gerät (30) nähert, und
- Ausgeben der Umsteigemöglichkeit auf dem portablen Gerät (30), wobei das Erfassen der Mitführung des portablen Geräts (30) auf dem Linien-Verkehrsmittel (B12, B14, B16, U34, U36, B44) auf der Seite des portablen Gerätes (30) erfolgt.

3. Verfahren nach einem der Ansprüche 1 oder 2, wobei das Ermitteln der wenigstens einen Umsteigemöglichkeit und das Ausgeben der Umsteigemöglichkeit auf dem portablen Gerät (30) automatisch erfolgt, sobald die Mitführung des portablen Gerätes (30) auf dem Linien-Verkehrsmittel (B12, B14, B16, U34, U36, B44) erfasst wird.

4. Verfahren nach Anspruch 1, wobei das Ermitteln der wenigstens einen zukünftigen Abfahrtszeit und/oder das Ermitteln der wenigstens einen Umsteigemöglichkeit mittels des portablen Gerätes (30) gestartet wird.

5. Verfahren nach einem der Ansprüche 1 bis 3, wobei das Erfassen der Annäherung des portablen Gerätes (30) an die Haltestelle (12, 14, 16, 34, 36, 44) und/oder das Erfassen der Mitführung des portablen Gerätes (30) auf dem Linien-Verkehrsmittel (B12, B14, B16, U34, U36, B44) auf der Seite einer Datenverarbeitungseinheit (20) erfolgt, für die Positionsdaten von zumindest einem Teil des Verkehrsnetzes (10) zugreifbar sind.

6. Verfahren nach Anspruch 5, wobei das portable Gerät (30) an der Datenverarbeitungseinheit (20) angemeldet wird.

7. Verfahren nach einem der Ansprüche 1 bis 6, wobei die Annäherung des portablen Gerätes (30) an die Haltestelle (12, 14, 16, 34, 36, 44) erfasst wird, sobald ein definierter Maximalabstand (32) zwischen dem portablen Gerät (30) und der Haltestelle (12, 14, 16, 34, 36, 44) unterschritten wird.

8. Verfahren nach einem der Ansprüche 1 bis 7, mit den Schritten:
- Eingeben eines Zielortes (46) in das portable Gerät (30),
- Ermitteln von Reiseverlaufsdaten, die wenigstens eines der folgenden Elemente aufweisen:
- Umsteigehinweis,
- Name einer Ziel-Haltestelle,
- Geplante Ankunftszeit an der Ziel-Haltestelle, und
- Ausgeben der Reiseverlaufsdaten auf dem portablen Gerät (30).

9. Verfahren nach einem der Ansprüche 1 bis 8, wobei das portable Gerät (30) über ein drahtloses Netzwerk auf Fahrplaninformation zugreift, die zumindest teilweise in einer zentralen Speichereinheit (22) und/oder zumindest teilweise in einer Mehrzahl von dezentralen Speichereinheiten (40) abgespeichert ist.

10. Verfahren nach einem der Ansprüche 1 bis 9, wobei auf dem portablen Gerät (30) Fahrplaninformation mit den Abfahrtszeiten wenigstens eines Linien-Verkehrsmittels (B12, B14, B16, U34, U36, B44) an einer Mehrzahl von Haltestellen (12, 14, 16, 34, 36, 44) abgespeichert wird.

11. Verfahren nach einem der Ansprüche 1 bis 10, wobei die positionsabhängigen Daten des portablen Gerätes (30) über ein verkehrsnetz-spezifisches Positionierungssystem, über ein globales Satellitennavigationssystem (26) und/oder über ein Mobilfunknetzwerk (24) ermittelt werden.

12. Verfahren nach einem der Ansprüche 1 bis 11, wobei die positionsabhängigen Daten des portablen Gerätes (30) über eine Nahfeldkommunikation ermittelt werden und/oder wobei Fahrplaninformation über die Nahfeldkommunikation an das portable Gerät (30) übertragen wird.

## Claims

1. A method for conditioning and displaying timetable information in a transport network (10) that has a plurality of stops (12, 14, 16, 34, 36, 44) for scheduled means of transport (B12, B14, B16, U34, U36, B44), having the steps of:
- sensing of the approach of a portable appliance (30) to a stop (12, 14, 16, 34, 30, 44) on the basis of position-dependent data from the portable appliance (30),
- ascertainment of at least one future departure time of a scheduled means of transport (B12, B14, B16, U34, U36, B44) at the stop (12, 14, 16, 34, 36, 44), and
- output of the departure time on the portable appliance (30),
wherein the ascertainment of the at least one future departure time and the output of the departure time on the portable appliance (30) are effected automatically as soon as the approach of the portable appliance (30) to the stop (12, 14, 16, 34, 36, 44) is sensed, and wherein the sensing of the approach of the portable appliance (30) to the stop (12, 14, 16, 34, 36, 44) is effected on the portable appliance (30).

2. The method as claimed in claim 1, having the steps of:
- sensing of the carriage of the portable appliance (30) on a scheduled means of transport (B12, B14, B16, U34, U36, B44) on the basis of the position-dependent data from the portable appliance (30),
- ascertainment of at least one connection to another scheduled means of transport (B12, B14, B16, U34, U36, B44) at the stop (12, 14, 16, 34, 36, 44) that the portable appliance (30) is approaching, and
- output of the connection on the portable appliance (30), and wherein the sensing of the carriage of the portable appliance (30) on the scheduled means of transport (B12, B14, B16, U34, U36, B44) is effected on the portable appliance (30).

3. The method as claimed in one of claims 1 or 2, wherein the ascertainment of the at least one connection and the output of the connection on the portable appliance (30) are effected automatically as soon as the carriage of the portable appliance (30) on the scheduled means of transport (B12, B14, B16, U34, U36, B44) is sensed.

4. The method as claimed in claim 1, wherein the ascertainment of the at least one future departure time and/or the ascertainment of the at least one connection is/are started by means of the portable appliance (30).

5. The method as claimed in one of claims 1 to 3, wherein the sensing of the approach of the portable appliance (30) to the stop (12, 14, 16, 34, 36, 44) and/or the sensing of the carriage of the portable appliance (30) on the scheduled means of transport (B12, B14, B16, U34, U36, B44) is/are effected on a data processing unit (20) from which position data from at least one portion of the transport network (10) are accessible.

6. The method as claimed in claim 5, wherein the portable appliance (30) is registered on the data processing unit (20).

7. The method as claimed in one of claims 1 to 6, wherein the approach of the portable appliance (30) to the stop (12, 14, 16, 34, 36, 44) is sensed as soon as there is less than a defined maximum distance (32) between the portable appliance (30) and the stop (12, 14, 16, 34, 36, 44).

8. The method as claimed in one of claims 1 to 7, having the steps of:
- input of a destination (46) into the portable appliance (30),
- ascertainment of itinerary data that have at least one of the following elements:
-- interchange advice,
-- name of a destination stop,
-- scheduled arrival time at the destination stop, and
- output of the itinerary data on the portable appliance (30).

9. The method as claimed in one of claims 1 to 8, wherein the portable appliance (30) uses a wireless network to access timetable information that is stored at least to some extent in a central memory unit (22) and/or at least to some extent in a plurality of local memory units (40).

10. The method as claimed in one of claims 1 to 9, wherein the portable appliance (30) is used to store timetable information with the departure times of at least one scheduled means of transport (B12, B14, B16, U34, U36, B44) at a plurality of stops (12, 14, 16, 34, 36, 44).

11. The method as claimed in one of claims 1 to 10, wherein the position-dependent data from the portable appliance (30) are ascertained using a transport-network-specific positioning system, using a global satellite navigation system (26) and/or using a mobile radio network (24).

12. The method as claimed in one of claims 1 to 11, wherein the position-dependent data from the portable appliance (30) are ascertained using near field communication and/or wherein timetable information is transmitted to the portable appliance (30) using the near field communication.

## Revendications

1. Procédé destiné à préparer et à afficher des informations d'horaire de transport dans un réseau de transport (10) qui comporte une pluralité de stations (12, 14, 16, 34, 36, 44) pour des moyens de transport régulier (B12, B14, B16, U34, U36, B44), avec les étapes :
- de la détection de l'approche d'un appareil portable (30) d'une station (12, 14, 16, 34, 36, 44) sur la base de données dépendant de la position de l'appareil portable (30),
- de la détermination d'au moins une heure future de départ d'un moyen de transport régulier (B12, B14, B16, U34, U36, B44) de la station (12, 14, 16, 34, 36, 44), et
- de l'édition de l'heure de départ sur l'appareil portable (30),
la détermination de l'au moins une heure future de départ et l'édition de l'heure de départ sur l'appareil portable (30) s'effectuant automatiquement, dès que l'approche de l'appareil portable (30) de la station (12, 14, 16, 34, 36, 44) est détectée et la détection de l'approche de l'appareil portable (30) de la station (12, 14, 16, 34, 36, 44) s'effectuant de la part de l'appareil portable (30).

2. Procédé selon la revendication 1, avec les étapes :
- de la détection de l'embarquement de l'appareil portable (30) sur un moyen de transport régulier (B12, B14, B16, U34, U36, B44), sur la base des données dépendant de la position de l'appareil portable (30),
- de la détermination d'au moins une possibilité de changement de véhicule sur un autre moyen de transport régulier (B12, B14, B16, U34, U36, B44) à la station (12, 14, 16, 34, 36, 44) de laquelle l'appareil portable (30) s'approche et
- de l'édition de la possibilité de changement de véhicule sur l'appareil portable (30), la détection de l'embarquement de l'appareil portable (30) sur le moyen de transport régulier (B12, B14, B16, U34, U36, B44) s'effectuant de la part de l'appareil portable (30).

3. Procédé selon l'une quelconque des revendications 1 ou 2, la détermination de l'au moins une possibilité de changement de véhicule et l'édition de la possibilité de changement de véhicule sur l'appareil portable (30) s'effectuant automatiquement, dès que l'embarquement de l'appareil portable (30) sur le moyen de transport régulier (B12, B14, B16, U34, U36, B44) est détecté.

4. Procédé selon la revendication 1, la détermination de l'au moins une heure future de départ et/ou la détermination de l'au moins une possibilité de changement de véhicule étant induite au moyen de l'appareil portable (30).

5. Procédé selon l'une quelconque des revendications 1 à 3, la détection de l'approche de l'appareil portable (30) de la station (12, 14, 16, 34, 36, 44) et/ou la détection de l'embarquement de l'appareil portable (30) sur le moyen de transport régulier (B12, B14, B16, U34, U36, B44) s'effectuant de la part d'une unité de traitement de données (20) qui peut accéder aux données de position d'au moins une partie du réseau de transport (10).

6. Procédé selon la revendication 5, l'appareil portable (30) étant annoncé à l'unité de traitement de données (20).

7. Procédé selon l'une quelconque des revendications 1 à 6, l'approche de l'appareil portable (30) de la station (12, 14, 16, 34, 36, 44) étant détectée dès qu'un écart maximal (32) défini n'est plus atteint entre l'appareil portable (30) et la station (12, 14, 16, 34, 36, 44).

8. Procédé selon l'une quelconque des revendications 1 à 7, avec les étapes :
- de la saisie d'un lieu de destination (46) dans l'appareil portable (30),
- de la détermination de données d'itinéraire, qui comportent au moins l'un des éléments suivants :
- une information de changement de véhicule,
- le nom de la station de destination,
- l'heure d'arrivée prévue à la station de destination et
- l'édition des données d'itinéraire sur l'appareil portable (30).

9. Procédé selon l'une quelconque des revendications 1 à 8, l'appareil portable (30) accédant via un réseau sans fil à une information d'horaire, qui est sauvegardée au moins en partie dans une unité de mémoire (22) centralisée et/ou qui est sauvegardée au moins en partie dans une pluralité d'unités de mémoire (40) décentralisées.

10. Procédé selon l'une quelconque des revendications 1 à 9, sur l'appareil portable (30) étant sauvegardée une information d'horaire, avec les heures de départ d'au moins un moyen de transport régulier (B12, B14, B16, U34, U36, B44) vers une pluralité de stations (12, 14, 16, 34, 36, 44).

11. Procédé selon l'une quelconque des revendications 1 à 10, les données dépendant de la position de l'appareil portable (30) étant déterminées par l'intermédiaire d'un système de localisation spécifique au réseau de transport, via un système de navigation par satellite (26) global et/ou via un réseau de téléphonie mobile (24).

12. Procédé selon l'une quelconque des revendications 1 à 11, les données dépendant de la position de l'appareil portable (30) étant déterminées par l'intermédiaire d'une communication en champ proche et/ou l'information d'horaire étant transmise à l'appareil portable (30) via la communication en champ proche.
